# EUROPEAN PATENT SPECIFICATION

(11) **EP 3 612 022 B1**
(45) Date of publication and mention of the grant of the patent: **06.11.2024**
(21) Application number: 18787486.2
(22) Date of filing: 18.04.2018
(51) Int. Cl.: A01K 61/60, A01K 63/10, B08B 13/00

(54) **AQUACULTURE CAGE COMPRISING TRACK FOR A TOOL CARRIER**
AQUAKULTURKÄFIG MIT EINER SCHIENE FÜR WERKZEUGTRÄGER
CAGE D'AQUACULTURE COMPRENANT UNE PISTE POUR PORTE-OUTIL

(30) Priority: 19.04.2017 NO 20170642
(43) Date of publication of application: 26.02.2020
(73) Proprietor: Aqua Robotics AS, 4344 Bryne (NO)
(72) Inventor: MOLAUG, Anders, 4347 Lye (NO); MOLAUG, Ole, 4345 Bryne (NO); AAMODT, Harald, 4352 Kleppe (NO)
(74) Representative: Håmsø Patentbyrå AS
(86) International application number: PCT/NO2018/050105
(87) International publication number: WO 2018/194461

(56) References cited:
- EP-A1- 2 151 163
- WO-A1-2004/017725
- WO-A1-2012/030226
- WO-A1-2014/011058
- WO-A1-2015/005801
- WO-A1-98/32330
- WO-A2-2013/126359
- CN-A- 104 798 703
- NO-L- 953 039

## Description

The invention relates to a cage including a surrounding holding structure.

### Background of the invention

For fish farming, floating cages can be used. The cages may comprise a closed enclosure, usually in the form of a net which allows the water to flow freely through the enclosure. Over time, the net will become covered in fouling and the water flow decreases. The oxygen content inside the cage decreases, which is unfortunate for the well-being, health and growth of the fish. The fouling organisms may, among other things, function as a reservoir for amoebae which may cause amoebic gill disease in the fish.

It is known to use so-called cleaner fish in cages to fight external crustacean parasites on the fish, for example salmon louse. If the net is not kept clean of fouling, the cleaner fish will eat from the fouling instead of eating salmon lice.

It is known in the industry to treat nets that are used for enclosures with impregnating agents to prevent fouling. Such impregnating agents are toxic in nature. Known impregnating agents include copper. It is also known that such nets must be shipped to special cleaning facilities for cleaning and re-impregnation. This is extensive work which presupposes the mobilization of a boat with a crane for the net to be lifted out of the sea and for the net to be put back into the sea.

An alternative to cleaning and impregnating the nets is washing the nets where they are. For this, various cleaning apparatuses that are lowered along the inside of the net may be used. The patent documents US2011/0185519 and EP2251102 show examples of apparatuses for cleaning a submerged net, especially a net in a fish cage. It is also known to use cleaning apparatuses in which water under high pressure is carried up to one or more rotating discs where the water is carried out through nozzles and flushes the net. One thing these apparatuses have in common is that they are operated from a surface vessel, usually a work boat with a crane which lifts and lowers the cleaning apparatuses.

A net that is seldom cleaned will require a more intensive cleaning than a net which is cleaned often. It has turned out that rare and intensive cleaning with high-pressure washing stresses the fish and leads to reduced growth in the days after the cleaning. In recent years, more gill problems have been observed in farmed fish, problems that are explained by too rare and intensive washing of the nets.

It is common for cages to be provided with so-called bird nets to keep predating birds away from the fish in the enclosure. The bird net may, for example, be supported by a tower positioned at the centre of the cage, and the bird net is attached to a railing surrounding the enclosure. To be able to clean the net from the inside, the bird net must be loosened from the railing as the cleaning apparatus provided with one or more hoses for the supply of water and/or energy is moved sideways along the net wall.

Because of the work of mobilizing a boat and crew, cleaning of the nets will not be carried out until the fouling is relatively extensive. There is therefore a need for simpler solutions which do not presuppose the use of a boat, and, at the same time, to avoid the use of high-pressure washing. Patent document NO 19964578 discloses a device for manoeuvring a cleaning apparatus on the bottoms of net bags under water. The device comprises a cleaning apparatus which is pulled back and forth on the bottom of the cage by two manually operated winding drums placed on a movable carriage. The carriage rests loosely on the railing of the cage, and a vertical supporting rod resting against the inside of the cage prevents the carriage from toppling inwards in the enclosure. The cleaning apparatus is connected to a through line which, via pulleys at the centre of the cage and at the edge, can be pulled back and forth on the bottom of the cage.

WO 2004/017725 A1 discloses a cage for farming aquatic organisms, the cage comprising a surrounding holding structure comprising a floating element which is connected to a closed enclosure, and a railing comprising an upright and a handrail connected to the floating element, wherein the cage is provided with a suspended track connected to the surrounding holding structure and along the holding structure on a side facing a centre of the cage, wherein the circumference of the track around the cage is smaller than the circumference of the railing around the cage, wherein the track is provided with a plurality of coupling members for attaching the track to the holding structure.

EP 2 151 163 A1 discloses a cage for farming aquatic organisms, the cage comprising a surrounding holding structure comprising a floating element which is connected to a closed enclosure, and a railing comprising an upright and a handrail connected to the floating element, the cage is provided with a suspended track connected to the surrounding holding structure and along the holding structure on a side facing a centre of the cage, the track being arranged to guide a tool carrier movably attached to the track, wherein the track is provided with a plurality of elongated coupling members for attaching the track to the holding structure, the track is endless, the track is formed as a closed, elongated structure with a continuous surface, and the track is adapted for carrying the tool carrier on a top side of the track.

### Description of the invention

The invention has for its object to remedy or reduce at least one of the drawbacks of the prior art or at least provide a useful alternative to the prior art.

The object is achieved through the features that are specified in the description below and in the claims that follow.

The invention is defined by the independent claim. The dependent claims define advantageous embodiments of the invention.

The applicant's Norwegian patent application NO20161527 discloses a simple cleaning apparatus with rotating brushes, arranged to be stationed in one cage, thereby being easily available for operation as required. In what follows, elements that together or separately may form part of an autonomous control of said cleaning apparatus are described.

The invention defined in claim 1 relates to a cage, more specifically a cage provided with a suspended track, the track being arranged to guide a tool carrier movably attached to the track, and the cage comprising a surrounding holding structure provided with a railing. The circumference of the track is smaller than the circumference of the railing. The track is provided with a plurality of elongated coupling members for attaching the track to the holding structure. Radially to the longitudinal direction of the track, the track is formed with a continuous tight surface. The track is adapted for carrying a load on a top side.

The effect of the continuous tight surface is that the track forms a closed, elongated structure. The continuous tight surface may constitute an outer surface of a closed pipe. The closed pipe may be subjected to an axial twisting. The axial twisting may occur as the closed pipe is subjected to a relative movement in relation to the holding structure, for example when the cage is moving in waves and rough sea. The track may hang above a water surface.

By a load-carrying top side, a portion of the track that is arranged to receive a compressive load exerted by gravity, for example a hanging load, may be understood. The hanging load may, for example, be an apparatus with a mass that is, in the main, resting on the top side of the track. The apparatus may be, for example, a tool carrier, a crane trolley or a robot, wherein said tool carrier, crane trolley or robot hangs down from the top side of the track, but is held firmly in a vertical direction by the top side of the track. The apparatus may be provided with a plurality of wheels which can roll on top of the track while, at the same time, the mass or a load is hanging below the track. By the top side, a portion of the track that may be in contact with the load that is resting on the track may be understood in this connection. The vertical load may be transmitted to the track via a plurality of wheels. The vertical load may be applied along a line, for example by the plurality of wheels being arranged in a line. The vertical load may be distributed radially, for example by at least two wheels being arranged in a V-shape.

The track is endless. An endless track will be stronger than a track with free end portions.

The track thus appears as an elongated, continuous body with a closed and tight surface. If the track has free ends, the track may have an unintended and unfortunate degree of free movement. This problem may be solved by attaching the ends of the track to the holding structure, for example by using rigid brackets.

An endless track makes it possible for the tool carrier to return to a starting point without changing its direction of progress. The track is formed in such a way that the tool carrier can be moved unobstructedly along the entire track. This is achieved by the track having a substantially uniform external cross section throughout its length.

The track may have a circular cross section. The effect of a circular cross section is that the track may absorb great torsional forces. Further, it may be simpler to bend a pipe with a round cross section than a pipe with an out-of-round cross section, for example a quadrilateral pipe.

The track may comprise a plastic pipe. A plastic pipe is relatively easy to work and has a low specific weight. The joining of the plastic pipes at the end portions of the pipes may be done in a prior-art manner, for example by using plastics welding. In an advantageous embodiment, the track comprises round plastic pipes which are known from fish farms. The plastic pipe may, for example, be of the same type as that known to be used as a handrail on a cage. The track may thereby be formed from the same type of plastic pipe as the handrail, which may simplify the logistics when building a cage with a track.

The track may have a positive buoyancy if it is positioned in water. Buoyancy may be provided by the profile of the track being closed. Buoyancy may be provided by the track being filled internally with a buoyancy means.

The elongated coupling member may have been passed radially around the track, transversely to the longitudinal direction of the track. The effect of this is that the track can be connected to the holding structure without there being a need to add a hole or other elements to the track. This also has the advantage of the weight of the track and apparatuses connected to the track being distributed over a larger surface of the track than with a point connection.

By a point connection, a coupling member attached to a limited portion of the track may be understood. Examples of point connections are a bolt that is secured to the wall of the track, for example by a threaded connection in which a bolt has been threadedly fixed in the wall of the pipe, and a hook which is attached in a hole in the wall of the track. Generally, a point connection will involve the formation of a hole in the pipe wall so that the pipe is punctured and thereby loses the buoyancy created in a closed pipe. A hole in the track is further unfortunate as it may weaken the strength of the track, and because a hook, for example, may result in heavy mechanical wear on the material around the hole.

The coupling member may form a suspension means on the track. Further, the coupling member described herein may be moved in an axial direction along the track. The track can thereby slide in the coupling member, which increases the freedom of movement in rough sea. A further advantage is that the coupling member may be arranged anywhere along the track, which simplifies the connection of the track to the holding structure.

The coupling member may be provided with a first end portion and a second end portion. The first end portion may be arranged to form an adjustable loop and the second end portion may be adapted for attachment to the holding structure. By a bendable elongated coupling member, a coupling member which may absorb stretching and which is twistable and which does not absorb compression is understood. Examples of suitable coupling members are a rope or a belt.

In a first end portion, the coupling member may be formed of a flat body. The flat body may be formed from a woven band. A body of such a form gives the coupling member a cross section with a low height. This is particularly advantageous as the tool carrier, which is movably attached to the track, can pass the coupling member in a problem-free way.

The first end portion of the coupling member may be provided with an oblong ring arranged to surround a middle portion of the coupling member, so that the coupling member forms an adjustable loop surrounding the track radially, transversely to the longitudinal direction of the track. The oblong ring may be attached to the end of the first end portion. A solution like that makes it possible to attach the first end portion of the coupling member around the track without the use of a tool or other means, while keeping the low profile of the coupling member at the same time.

A person skilled in the art will be able to make an alternative coupling member comprising an adjustable loop as described, by using a simple rope or belt. However, such a solution may entail a higher cross section of the loop, which may create problems for the tool carrier when it is to pass the coupling member.

The first end portion of the coupling member, which comprises the loop, may be displaceable along the track in the longitudinal direction of the track. This means in practice that the coupling member may be attached anywhere along the track. Using an adjustable loop as described, an installer can attach the coupling member to the track without any tools and, if necessary, easily slacken the loop around the track and adjust the positioning. After installation, the displaceable end portion may give the track a certain freedom of movement horizontally relative to the surroundings. However, it is assumed that the friction between the coupling member and the track is too high to give the track noticeable motion, especially when the track is provided with several coupling members.

In an alternative embodiment, the track may include fixed points for the coupling member, for example a hook or a bolt which is attached into or through a wall of the track, on the side of the track facing the railing. A person skilled in the art will consider this a more complicated solution, and the solution may puncture the track and, with that, reduce the buoyancy of the track, if the track is a pipe.

The coupling member may constitute a flexible coupling between the holding structure and the track. A flexible coupling as described herein gives the track the necessary freedom of movement, for example in rough sea. A certain flexibility in both the coupling member and the track is necessary to absorb the forces and the movements imposed on a fish farm, so that unnecessary and harmful stresses on the track and holding structure imposed by waves and rough sea can be reduced.

The flexible, attached coupling may comprise a chain, a belt or a rubber strap. One thing these have in common is that they can absorb stretching, but not twisting or compression. In rough sea, it may be assumed that the shape of a floating holding structure periodically and alternately takes a limitedly oval shape. With a flexible track as described herein, the track may move in several planes without being damaged or causing damage to the holding structure. Said flexibility may be achieved by the track comprising a thin-walled plastic pipe and the plastic pipe.

There are no limitations on the number of coupling members that may be used on a track. However, in practice, it will be relevant to have as many coupling members as there are uprights in the holding structure of a cage. On a cage, the coupling member should, for reasons of strength, be connected to the upright of the railing or in the immediate vicinity of the upright. Today, the largest cages have a circumference of 200 metres. With a distance of, for example, three metres between the uprights, a track as described may be attached with about 65 coupling members to the holding structure.

The coupling member may include an elastic portion. The coupling member may be elastic in a longitudinal direction. In its simplest form, an elastic coupling member may be a rubber strap of the type used for attaching a tarpaulin on a trailer or a lorry. An elastic coupling member may make for smoother and smaller movements of the track, while, at the same time, the freedom of movement of the track is maintained.

In its second end portion, the coupling member may be provided with means for attachment to the holding structure. The holding structure may be of various designs and the design of the second end portion may be adapted for the holding structure. Relevant solutions for an adaptation are grommets, eyes and hooks. It is particularly advantageous to attach the coupling member to the handrail in such a way that the coupling member extends somewhat at an angle downwards from the handrail to the track. The handrail will be substantially horizontal, and the second end portion of the coupling member can be moved along the longitudinal direction of the handrail in the same way as the first end portion can be moved along the longitudinal direction of the track.

The coupling members project at an angle upwards from the track to the holding structure. This allows the tool carrier to pass the coupling member unobstructedly, because the coupling member is flat and thereby builds little in height, as described in the above, and because the main part of the tool carrier is positioned on the side of the apparatus that faces away from the holding structure. The tool carrier is provided with a slit-shaped opening on the side of the tool carrier facing the holding structure, and the coupling member is passed through the slit-shaped opening when the tool carrier is being moved past the coupling member.

A tool carrier adapted for movement along a track in a cage belonging to a fish farm is described as well. The tool carrier is provided with a propulsion means for moving the tool carrier along the track and a guiding means for keeping the tool carrier movably attached to the track. The tool carrier is further provided with at least one spacer arranged to be moved along a holding structure or an enclosure. The holding structure comprises a floating body and a railing. The enclosure may comprise a jump net and a cage net. The at least one spacer may comprise a floating body.

The guiding means may be a detachable body. The guiding means may comprise a shape and be formed from a material designed to not create unnecessary friction between the guiding means and the apparatus. The guiding means may, for example, comprise a body or a running wheel attached to the tool carrier. The distance between the propulsion means and the guiding means is smaller than the cross section of the track, so that the tool carrier will not fall off the track. Said distance is, at the same time, large enough to allow the tool carrier unobstructed passage past the coupling member. When the guiding means has been detached, the tool carrier may be put onto or removed from the track.

The at least one spacer may be rotatably attached to the tool carrier. The spacer may comprise a buoy of a known type. In an advantageous embodiment, the tool carrier includes two rotatable spacers. The spacer has buoyancy which enables the tool carrier to float in the water surface. A person skilled in the art will be able to calculate the size of the spacer to achieve the correct buoyancy. If the tool carrier is provided with two spacers with buoyancy, the tool carrier may be kept level afloat around an approximately horizontal axis in the water line. This may be advantageous when the tool carrier is being attached and detached to/from the track. Further, the floating body will prevent the tool carrier from sinking if it comes loose from the track.

The means for moving the tool carrier along the track may include a traction wheel. The traction wheel may be driven by a motor. The means for moving may include a pair of wheels including at least one wheel driven by the motor. The pair of wheels may also be carrying wheels for the tool carrier. An alternative device for moving the tool carrier may, for example, be a cable drive or a belt.

The traction wheel may comprise a material adapted for the surface and be provided with a tread pattern for maximum wheel grip on the track. If the track comprises a smooth pipe, the wheel may, for example, be provided with a soft, rubber-coated surface. The traction wheel may be formed as a cylinder or be provided with a concave recess adapted for the track. A wheel with a recess has a guiding effect which may help the tool carrier to follow the track better than a plane wheel.

The tool carrier may be provided with at least one underlying pressure wheel placed on a movable wheel arm. When the tool carrier is in a position of application on the track, the traction wheel may be positioned on the top side of the track and the pressure wheel may be positioned on the bottom side of the track. By applying a moment to the wheel arm by using a prior-art technique, for example by using a spring or a hydraulic cylinder, the traction wheel and pressure wheel will be pushed towards each other, thereby giving the traction wheel increased pressure against the track and, with that, a better grip.

The tool carrier may include a first counter to register the revolutions of the wheel. The counter may be used for calculating the distance that the tool carrier is moved along the track and the position of the tool carrier on the track. In an advantageous embodiment, the tool carrier may have an electronic counter. If the tool carrier has a fixed starting point, an electronic counter may automatically be zeroed each time the tool carrier leaves said starting point. Thereby, any erroneous recording caused by possible wheel spin on the track will be corrected each time the tool carrier leaves the starting point.

The tool carrier may include a winch provided with a drum and a winch cable. The drum may include a counter for measuring the length of cable paid out from the drum. At its free end, the cable has prior-art means for connection to a tool. The tool may comprise a cleaning apparatus. There are no limitations in principle on what kind of tool or implement may be connected to the cable. The drum may be arranged to raise and lower the connected implement, and the counter gives information to an operator or a control system about how far below the water plane the free cable end or the implement is. The winch cable may be a prior-art combined cable, which, in addition to being able to carry a load, also includes cables for power and/or electronic signals.

The tool carrier may include a connector for a conduit system, the conduit system being taken from a group consisting of an electrical cable, a hydraulic hose or a pneumatic hose. The tool carrier may include several connectors like that.

The tool carrier may include a battery. In an advantageous embodiment, the battery may be rechargeable. A recharging of the battery may take place by the tool carrier being connected to a prior-art contact point, for example a cable with a plug or a stationary point arranged on the track. The tool carrier may also include a means of inductive charging.

The tool carrier may include an electronic control system with a possibility of programming the movement of the tool carrier and the raising and lowering function of the drum. The tool carrier may, for example, be programmed to frequently move a cleaning apparatus down and up across an upper portion of the enclosure where there is much fouling, and more rarely all the way to the bottom of the enclosure where there is little fouling. In summer, when the fouling is heaviest, it may be assumed that the apparatus is in operation daily. In winter, when the fouling is reduced, the apparatus is used more seldom, maybe every three days. The system may include recording and thereby documentation of work carried out.

The tool carrier may be adapted for use together with other tool carriers. A plurality of tool carriers in one cage may include a shared control system adapted for communication between the tool carriers. The tool carriers may thereby cooperate on the positioning of equipment in the cage. The control system may further include a function for three-D positioning of equipment in the cage.

A winch for a tool carrier is described as well, the tool carrier being arranged to move a tool along a track on a fish farm, and the winch comprising a drum with a cable, a free wheel and a driveshaft connected to a motor. The free wheel is arranged in such a way that the motor only has a driving effect on the drum when the drum is retracting the cable. The rotational speed of the drum is equal to or lower than the rotational speed of the driveshaft when the cable is being paid out. The rotational speed of the drum is equal to or higher than the rotational speed of the driveshaft when the cable is being rolled up. The winch may be driven by an electric motor.

A cage is provided with vertical or slightly sloping walls. Currents in the water may give swellings on the wall, and the swellings may go both inwards and outwards from the cage. If a cleaning apparatus is lowered down along a net wall with a swelling, the movement of the cleaning apparatus may be obstructed by the swelling. The cleaning apparatus may also get stuck in a possible hole in the net wall.

If the cable has forced pay-out, the cable will be paid out even if the downward movement of the cleaning apparatus has been given a reduced speed or has stopped completely because of swellings on the net wall. This may result in a tangle in the cable. If the cleaning apparatus comes loose and there is no tension in the cable, the cleaning apparatus may fall freely in the water and sustain damage on a possible collision with the net wall or as tension is obtained again in the cable.

A free wheel may reduce or eliminate the risk of a tangle in the cable in that the paying-out of the cable follows the cleaning apparatus and the drum may be uncoupled from the driving driveshaft of the motor. When the cable is pulled off the drum, the drum has a pay-out direction of rotation. When cable is pulled onto the drum, the drum has a pay-in direction of rotation.

When the motor is at rest, the pay-out rotation of the drum will be blocked. During pay-out, the driveshaft will rotate in the direction of rotation of the drum. The motor will, in practice, function as a mechanical brake, wherein the rotational speed of the drum during pay-out cannot exceed the rotational speed of the driveshaft. If the tension in the cable ceases, for example by the cleaning apparatus on the free end of the cable stopping in a swelling on the net wall, the drum and the paying-out of the cable will stop, whereas the driveshaft may still rotate. In an embodiment in which the motor is programmed for a specific number of rotations, the motor and driveshaft will rotate until the programmed rotations have been achieved. The motor will then change its direction of rotation so that the drum will have a pay-in direction of rotation.

The free wheel may be mechanical or friction-based. In an advantageous embodiment, the free wheel is mechanical, as it has a simpler and more reliable construction than a friction-based wheel.

The drum may be provided with a first prior-art counter arranged to register the length of cable that has been paid out. The winch may be programmed to payout one or more lengths of the cable and at different frequencies and at different positions along a track. When the set cable length has been paid out, the motor and thereby the drum change their direction of rotation, and the cable is pulled back in.

The driveshaft may be provided with a second prior-art counter. In a normal situation of operation, the number of rotations will be the same for the drum and the driveshaft. If a difference should arise in the number of rotations and the rotational speed, this may indicate technical problems.

The first and second counters may be connected to prior-art means for wireless signal transmission. Signals may, for example, be given to an operator if repeated differences in rotational speed and number of rotations of the drum and driveshaft are registered.

A cabled energy supply for an apparatus including a connector for a conduit system is described as well, the apparatus being movably attached to a track, and the track being arranged along the surrounding holding structure of a cage and the cabled energy supply including a conduit system. At least two elongated carrying elements are each arranged to be attached, at their first end portions, to the holding structure and are connected, at their second end portions, to each other in a stationary, submerged coupling. A centre weight is anchored to the stationary coupling. The conduit system extends from an external energy source via the first end portion of one of the carrying elements, via the coupling and to the apparatus. A tensioning weight is arranged at a portion of the conduit system at a distance from the stationary coupling.

The weight of the centre weight will help to tension the carrying elements and help to keep the coupling at the centre of the cage. The centre weight may be directly connected to the coupling or include a distance piece.

In an advantageous embodiment, the device includes three carrying elements which are of the same length and are placed in a star-shape with equal angles between them, so that, in the main, the coupling point is positioned in the centre portion of the cage.

A conduit system extends from the first end portion of one of the carrying elements, via the coupling and to an apparatus, for example a tool carrier. In an advantageous embodiment, the conduit system is fixedly connected to the carrying element so that it is not floating partially freely in the water and thereby causing unnecessary stretching of the end portions of the conduit system. The part of the conduit system that is above the water line may include a floating element as a safety device in case the conduit system falls into the water.

In a portion of the conduit system at a distance from the coupling, a tensioning weight is arranged. The conduit system will thereby be given a portion that is positioned at a distance from and deeper than the stationary coupling. The purpose of establishing this lower portion is to prevent the conduit system from coming into contact with, and possibly getting entangled in, the carrying elements when the conduit system is following an apparatus that is moving along the holding structure of the cage.

The tensioning weight may be displaceably attached to the conduit system, for example via a pulley. The tensioning weight may be connected to the cable via a distance piece.

The conduit system may be selected from a group consisting of an electrical cable, a hydraulic hose or a pneumatic hose. The conduit system may comprise cables of different types. A conduit system comprising several cables may, in an advantageous embodiment, be gathered in a splittable, flexible cable pipe or be attached to each other at evenly spaced points over the distance for which they are gathered.

The conduit system may constitute one of the three carrying elements. In that case, the conduit system, in an advantageous embodiment, is a prior-art combined cable which may also absorb tensile forces. A combined cable will give a simpler design of the energy system and fewer components. A possible rupture in and replacement of a combined cable may result in the carrying structure partially collapsing.

At least one of the carrying elements may be connected to the holding structure of the fish farm via an arm, and the arm may be movable. The arm may be arranged to guide the carrying element and the conduit system over a track arranged along the surrounding holding structure of the cage so that a tool carrier movably attached to the track can move unobstructedly along the entire track. Currents in the water will give a certain motion in the carrying elements and associated tensioning at the connections of the carrying elements to the holding structure. By using a flexible arm, the forces exerted on the holding structure may be reduced.

A system for the wireless transmission of electrical power from a track to a tool carrier in a cage belonging to a fish farm is described as well, the cage comprising a surrounding holding structure, the track and the tool carrier, and the tool carrier being arranged for movement along the track, and a primary coil being arranged in the track and a secondary coil being arranged in the tool carrier. The primary coil and the secondary coil create a magnetic field which is substantially perpendicular to the centre axis of the track.

The primary coil functions as a charging point and is placed, in an advantageous embodiment, in a protected manner inside the track. The track may be a closed pipe or an open profile. A wireless energy supply as described herein is particularly advantageous in wet and saline surroundings.

The primary coil may be arranged inside a profile formed from plastic or a composite material.

The primary coil may be arranged in an enclosing housing which has an outer shape that is complementary to the inner shape of the track. The housing may be moulded and may, in an advantageous embodiment, be moisture- and salt-resistant. If the track consists of a round pipe, the primary coil may be arranged in a cylindrical body.

At its end portions, the housing may be provided with a contact for connection to another primary coil. The track may include several charging points. These may then, in an advantageous embodiment, be positioned evenly distributed along the track, and the charging points may be interconnected by cables inside the track. A first charging point may be connected, at its first end, to an external energy source and be connected, at its second end, to the first end of a second charging point. The second end of the second charging point may be connected to the first end of a third charging point.

A dimensioning factor for the number of charging points and their positioning may be the distance that the tool carrier moves along the track when under full load. A tool carrier comprising a winch and a cleaning apparatus will consume more energy when cleaning a deep cage than when cleaning a shallow cage. Consequently, a deep and wide cage may require more charging stations than a shallower cage. On the basis of the power consumption of the tool carrier, a person skilled in the art can define the optimum number of charging points.

The housing and the tool carrier may be provided with sensors for indications of the relative positions of the primary coil and the secondary coil. The system may comprise means of identification and information on charging status, and means of transmitting said information to a central control unit. In that way, an operator may be informed if one or more charging points have a functional fault. If a functional fault is registered, the tool carrier can be programmed to move to another, and the most adjacent, functioning charging point for recharging.

The housing and the primary coil may further comprise means for axial and radial positioning, for example grooves or an attachment for a tool. The housing may be attached to the track with prior-art means, for example glue or screws.

If the track is a pipe with a circular circumference, the tool carrier may have a limited rotation around the centre axis of the pipe, in consequence of influence from waves and the position of the track above the water. It is known that efficient wireless energy transmission requires correct positioning of the primary coil and the secondary coil relative to each other. To compensate for angular differences between said two coils, the primary coil may be connected to a body comprising a rotation device. The rotation device may be provided with means for rotating the primary coil around the centre axis of the pipe. Said means may be an electromotor, a magnet or a gravitative weight.

The elements that are described above may be independent of each other. In an advantageous embodiment, an autonomous cleaning system may include several of the elements put together into one system.

In what follows, an example of a preferred embodiment is described, which is visualized in the accompanying drawings, in which:
- Figure 1: shows in perspective, in a principle drawing, some of the elements of a cage belonging to a fish farm, the figure showing a surrounding holding structure comprising a floating element and a railing, a track a plurality of coupling members, a tool carrier and an energy system;
- Figure 2: shows on a larger scale, in perspective, the tool carrier attached to the track;
- Figure 3: shows a side view, on a larger scale, of the tool carrier attached to the track;
- Figure 4: shows a perspective view, on a larger scale, of the tool carrier;
- Figure 5: shows, on a larger scale, the tool carrier viewed from above;
- Figure 6: shows in perspective, in an enlarged section of figure 1, the track and a plurality of coupling members;
- Figure 7: shows on a larger scale, in perspective, a coupling member;
- Figure 8: shows, in a side view, a view of a cabled energy system;
- Figure 9: shows the same as figure 8, viewed from above;
- Figure 10: shows, in perspective, a principle drawing of an inductive charging unit arranged to be attached to the track and the tool carrier;
- Figure 11: shows, in a side view, a principle drawing of the inductive charging unit shown in figure 10;
- Figure 12: shows, in perspective, the inductive charging unit positioned in a pipe;
- Figure 13: shows a principle drawing of the tool carrier provided with a winch with a free wheel for raising and lowering a cleaning apparatus; and
- Figure 14: show a principle drawing of a cleaning cycle in a cage.

The figures are shown in a simplified and schematic way, and details that are not important to elucidate what is new in the invention have been left out in the figures. The various elements in the figures are not necessarily shown to scale. Like or corresponding elements will be indicated by the same reference numbers in the figures.

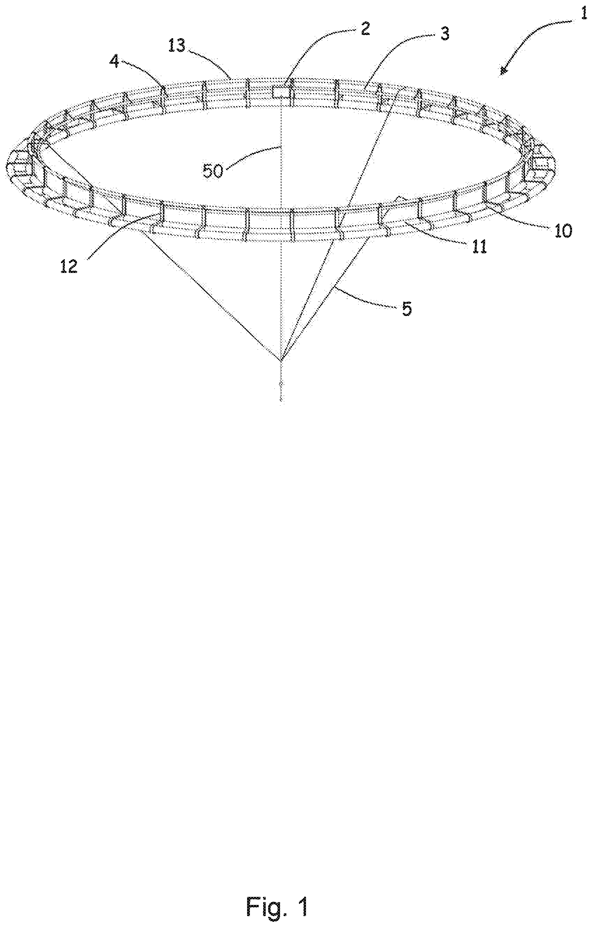

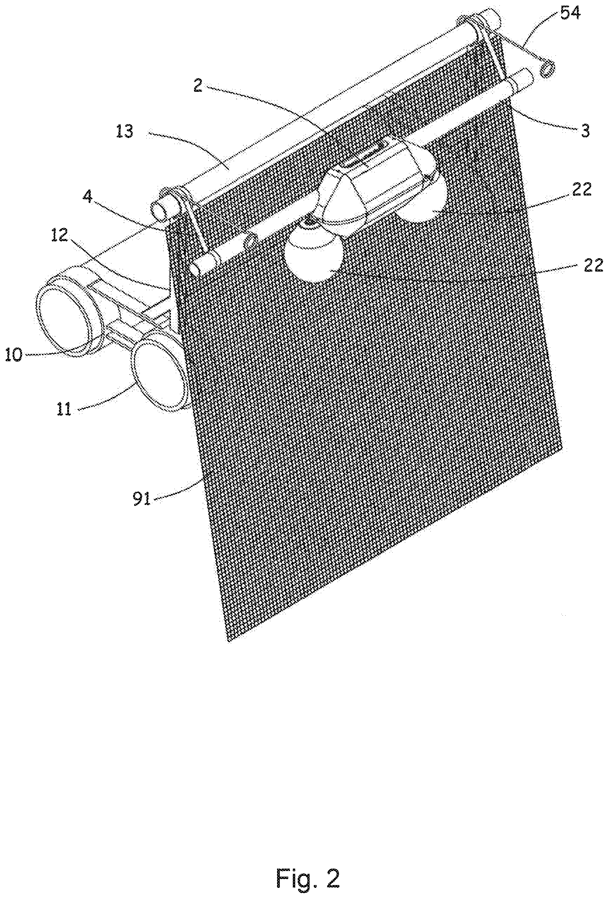

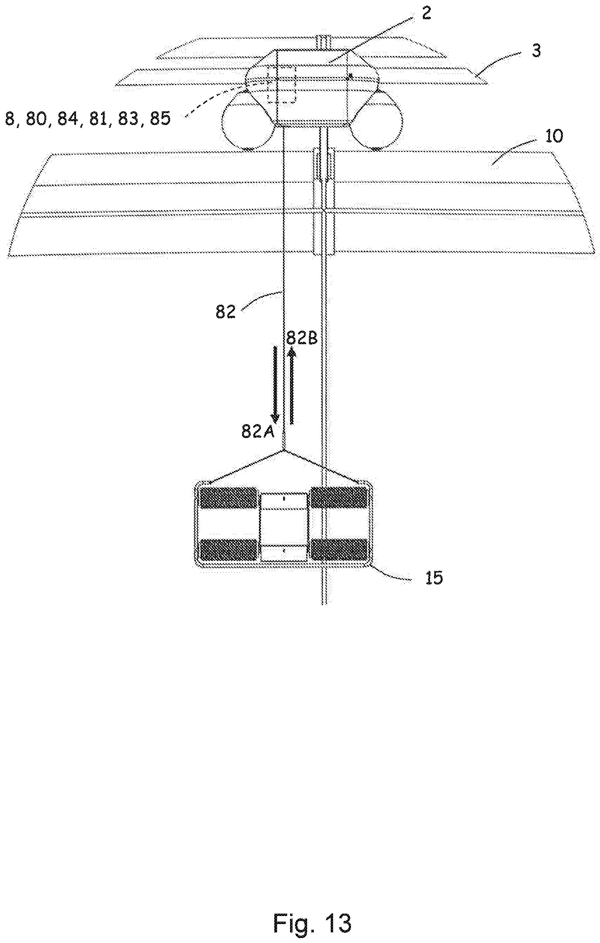

Figure 1 shows parts of a farm 1 for aquatic organisms, for example fish. In figure 1, part of a surrounding holding structure 10 comprising a floating element 11 which is connected to a closed enclosure 91 for fish (see figure 2) projecting downwards in the water is shown. The enclosure 91 may consist of a net, for example. A bird net (not shown) arranged to cover the open area within the railing 13 may be attached to the railing 13. Figure 1 further shows a tool carrier 2, arranged to move along a track 3. The tool carrier 2 includes a winch 8, in which a winch cable 82 is connected, at its free end, to a cleaning apparatus 15 (see figure 13). The track 3 is connected to the holding structure 10 via several coupling members 4. The tool carrier 2 is supplied with electrical energy via an energy cable 50 which is part of an energy system 5 for cabled energy supply and connected to the holding structure 10.

Figure 2 shows the tool carrier 2 placed on the track 3. The track 3 is connected to the holding structure 10 via a plurality of coupling members 4. Two rotatable spacers 22 are attached to the tool carrier 2 and abut against the enclosure 91. When the tool carrier 2 is moved along the track 3, the two spacers 22 will rotate.

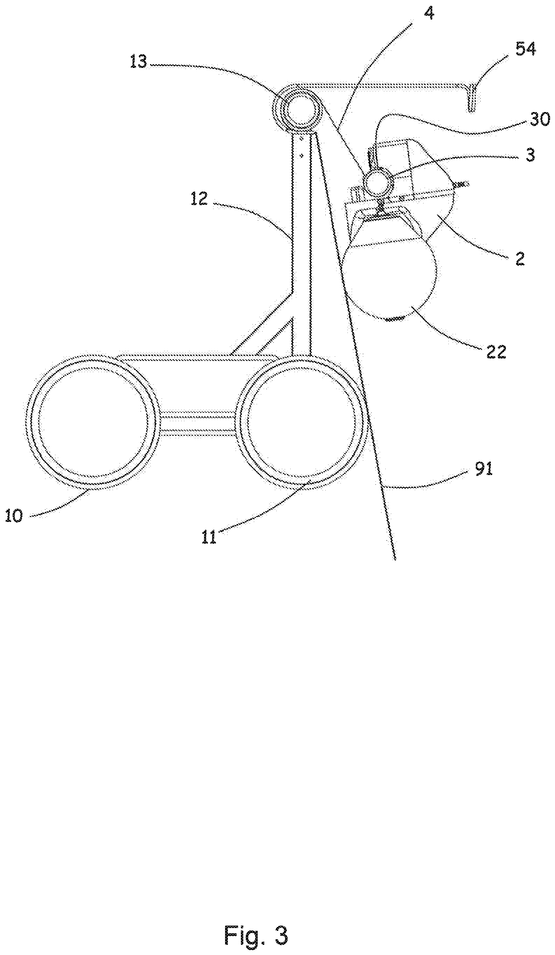

Figure 3 shows the tool carrier 2 viewed from the end, placed on the track 3. The coupling member 4 is attached, in a first end portion 41, to the track 3 and is attached, in a second end portion 42, to the holding structure 10. In the figures, it is shown that the coupling member 4 is attached to the railing 13. The coupling member 4 is slanted between the railing 13 and the track 3. The tool carrier 2 is provided with a slit or a longitudinal opening which coincides with the coupling member 4 so that the tool carrier can be moved past the coupling member 4, so that the tool carrier 2 may pass the coupling member 4 in a problem-free manner without touching the coupling member 4. An arm 54 guides the energy system 5 (figures 1, 8 and 9) over the tool carrier 2. In its simplest form, the arm 54 may be a horizontal rod made from stainless steel. In an alternative embodiment, the arm may be bendable and, for example, comprise a rod made of plastic or carbon. The tool carrier 2 rests on a load-carrying top side 30 of the track 3.

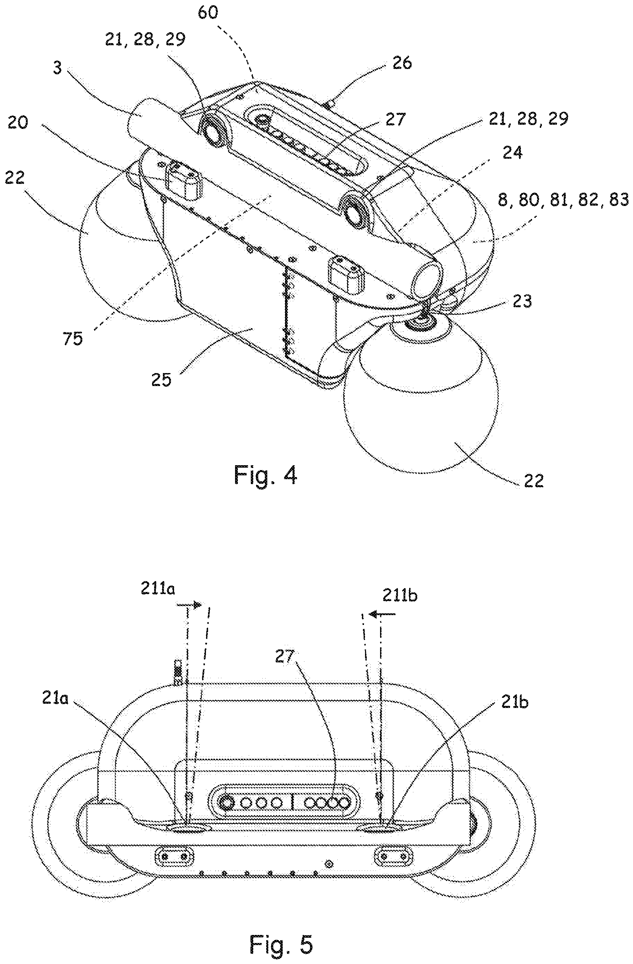

Figure 4 shows the tool carrier 2 in perspective, where a surface 25, vertical in a position of application, is facing the holding structure 10 and the enclosure 91 (see figures 2 and 3). The tool carrier 2 is provided with wheels 21 which are placed on the track 3. At least one wheel 21 is motor-driven. The wheels 21 are provided with a counter (not shown). A spacer 22 is attached to the tool carrier 2 via a rotatable axle 23. The spacer 22 is provided with buoyancy means and is shown in the figure in the same external shape as an ordinary buoy. The tool carrier 2 further includes a guiding means 20 on the outside of the track 3, shown here as a block, and a guiding means 24 (hidden) on the inside of the track 3, here in the form of a running wheel. The tool carrier 2 is further provided with a connector 26 for an energy cable 50, see figure 1.

Figure 5 shows the tool carrier 2 seen from above. Placed on a circular cage, the tool carrier 2 will follow a circular path with a radius of typically between 15 and 30 metres. If the axial centre line 211a of the first wheel 21a is parallel to the axial centre line 211b of the second wheel 21b, the wheels 21a and 21b will push the tool carrier 2 outwards. In an advantageous embodiment, the orientation of the wheels 21a and 21b may be adjusted in such a way that the centre lines 211a and 211b meet in a virtual point at the centre of the cage.

In an alternative embodiment, the tool carrier 2 may be placed on a quadrilateral cage (not shown). Placed on a quadrilateral cage (not shown), the track 3 may comprise several straight portions and corners of a small radius. In such a configuration, the tool carrier 2 may be provided with double pivotable wheel pairs (not shown) for better tracking along the track 3.

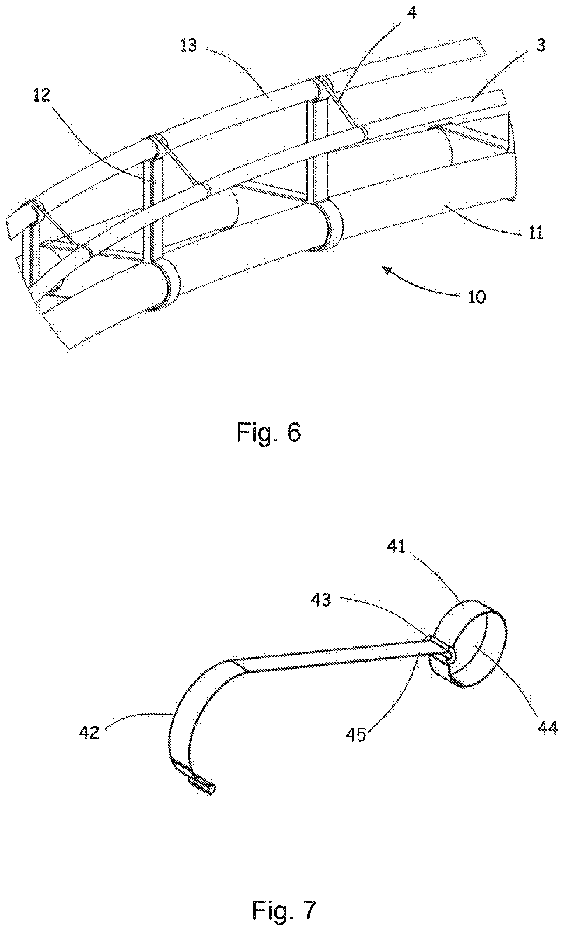

Figure 6 shows a section of the track 3 in perspective. The track 3 is connected to the holding structure 10 via the flexible coupling member 4. The holding structure 10 comprises the floating element 11 and the railing 13. The railing 13 comprises an upright 12 and a handrail.

There are no limitations on the number of coupling members 4 that may be used, but, in an advantageous embodiment, there will be as many coupling members 4 as the number of uprights 12. The radius of the track 3 is smaller than the radius of the railing 13. The radius of the track 3 may be larger or smaller than the internal radius of the floating element 11. The length of the coupling member 4 is adapted in such a way that the track 3 is kept raised above the water surface (not shown) in the cage as is shown in the figures.

When the track 3 is connected to the holding structure 10 via the flexible coupling member 4, the track 3 will have a limited freedom of movement. In rough sea, the farm 1 (see figure 1) will be subjected to great forces. In such a situation, the flexible coupling member 4 will give the holding structure 10 and the track 3 a possibility to move independently of each other both vertically and horizontally.

Figure 7 shows a view of the coupling member 4 in perspective. The coupling member 4 is preferably formed from a flat material as shown in figure 7. The flat material may be formed as a woven material. The first end portion 41 is provided with an oblong ring 43 arranged to form a loop 44 when the coupling member 4 is threaded through the ring 43 as shown in figure 7. The loop 44 is arranged to be passed around the circumference of the track 3, transversely to the longitudinal direction of the track 3 as shown in figure 6. The second end portion 42 of the coupling member 4 is attached to the holding structure 10 as shown in figure 6. The second end portion 42 may have alternative embodiments, adapted for the construction of the holding structure 10.

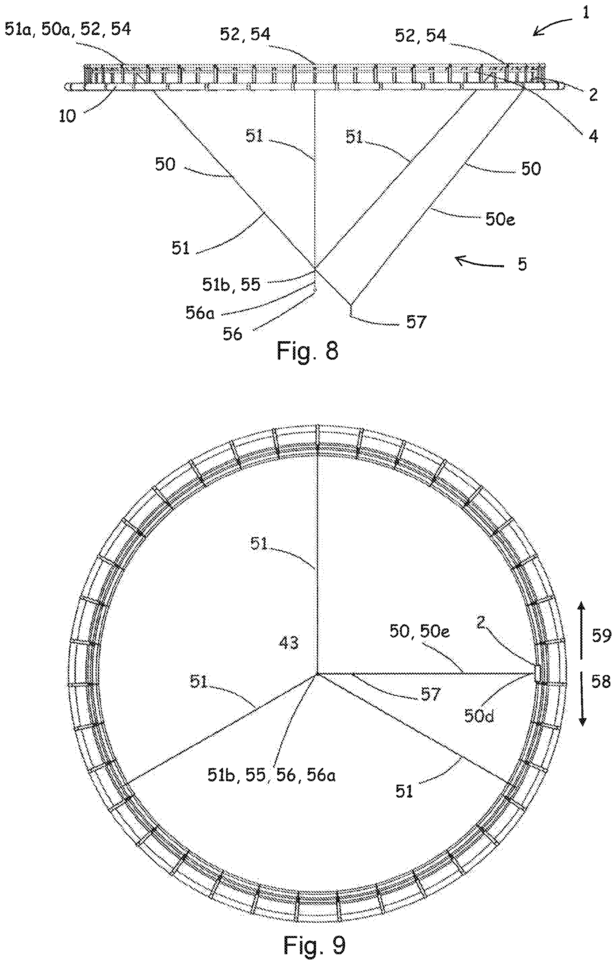

Figures 8 and 9 show an example of a system for cabled energy supply to a movable tool carrier 2. Three carrying elements 51 are connected, at their first end portions 51a, to the holding structure 10, each via a respective arm 54, the arms 54 being equally spaced around the holding structure 10. At their second end portions, the three carrying elements 51 are connected to each other in a stationary coupling 55. When the three carrying elements 51 have the same length, the coupling 55 will position itself at the centre of the cage 1. To keep the coupling 55 as stationary as possible, a centre weight 56 is attached to the coupling 55 via a distance piece 56a.

A prior-art energy cable 50 is attached, at its first end portion 50a, to the holding structure 10 via the arm 54 and is further connected, at its first end, to an energy source (not shown). The energy cable 50 is attached, at its middle portion, to the stationary coupling 55 and is connected, at its second end 50d, to the tool carrier 2. Between the holding structure 10 and the coupling 55, the energy cable 50 is attached to one carrying element 51. From the coupling 55 to the tool carrier 2, the energy cable 50 hangs freely in the water. For the free portion 50e of the energy cable 50 not to come into contact with the carrying elements 51, the energy cable 50 is provided, at its free portion 50e, with a tensioning weight 57 which pulls the energy cable 50 away from the carrying elements 51, the coupling 55 and the centre weight 56.

To avoid twisting the energy cable 50, the tool carrier 2, in an advantageous embodiment, will alternately move a full circuit along the track in a first direction 58 and a full circuit along the track in a second direction 59.

To avoid twisting the power cable 50, the tool carrier 2, in an advantageous embodiment, will alternately move a full circuit in the first direction 58 and a full circuit in the second direction 59.

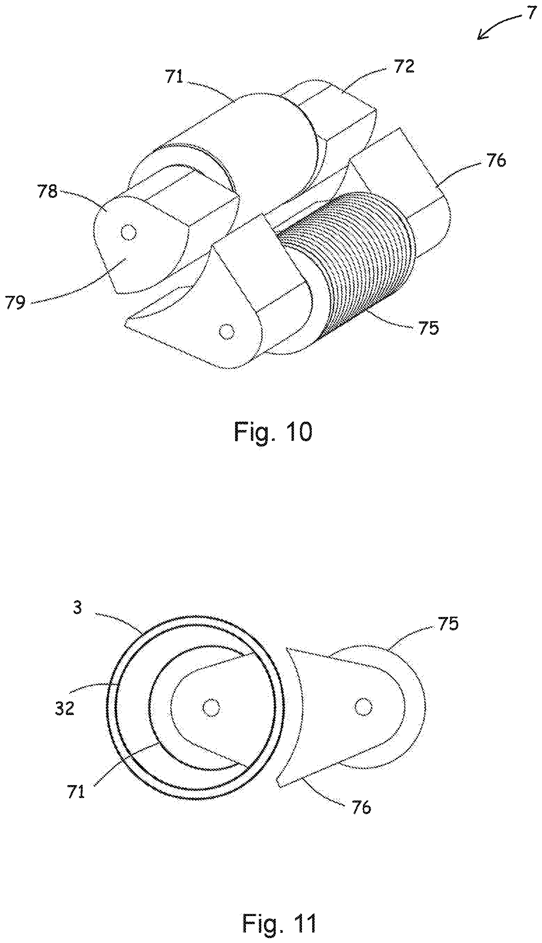

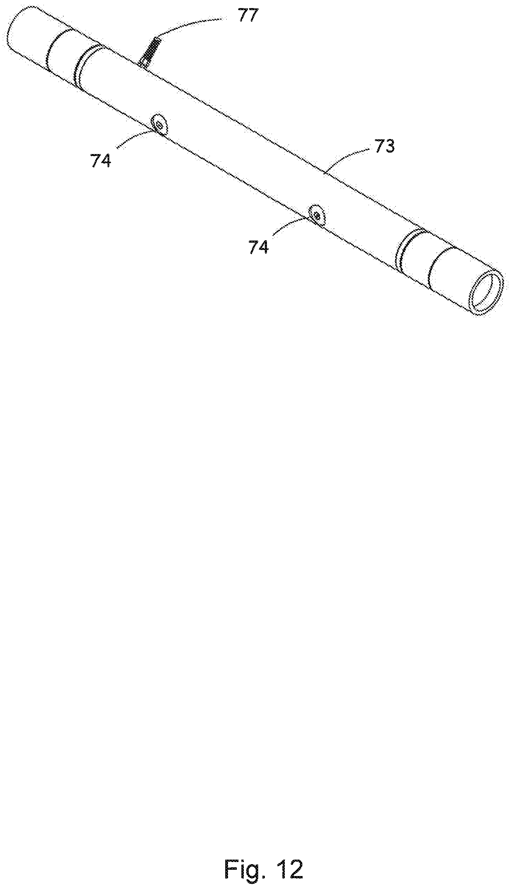

Figures 10, 11, 12 shows principle drawings of an inductive charging system. A primary coil 71 is placed in a first housing 72 (partly shown) which is placed inside a pipe 73. The pipe 73 is provided with a connector 77 for connection to an energy source (not shown). The pipe 73 is of the same type as the track 3 (figures 2, 6). The housing 72 is attached to the pipe 73 with a screw connection 74. The pipe 73 may be attached to the track 3 by plastics welding or a prior-art connectable coupling (not shown).

The secondary coil 75 is placed in a second housing 76 on the tool carrier 2, between the support wheels 24 (see figure 4). The secondary coil 75 is connected to a battery (not shown) on the tool carrier 2. The first housing 72 and the second housing 76 are provided with position sensors (not shown), arranged to give the primary coil 71 and the secondary coil 72 an optimum relative position for maximum energy transfer.

Figure 13 shows a principle drawing of the tool carrier 2 provided with a winch 8 (hidden) and a cleaning apparatus 15. The winch 8 is provided with a free wheel 81 (hidden) so that a winch motor 83 (hidden) slows down a winch cable 82 when the winch cable 82 has a downward stretch in the cage. If the downward movement 82A of the cleaning apparatus 15 is slowed down or ceases, the free wheel will uncouple the winch 8 so that no more cable 82 is paid out, even if the motor 83 is running.

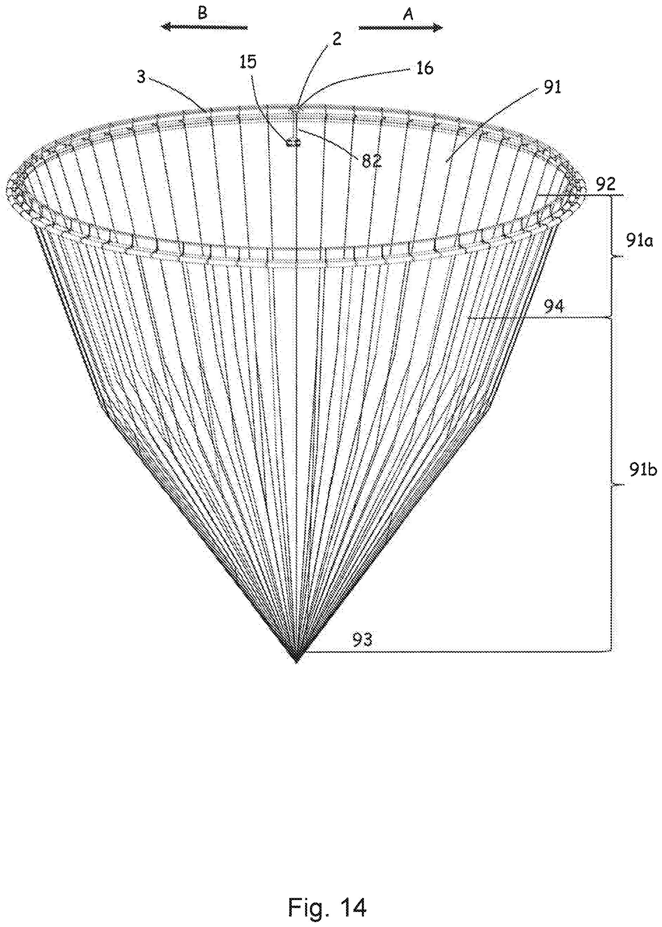

Figure 14 shows the farming cage 1 including the track 3, the tool carrier 2 and the cleaning apparatus 15. The enclosure 91 is divided into an upper portion 91a for high-frequency cleaning and a lower portion 91b for low-frequency cleaning. In what follows, an example of an autonomous operation cycle for said system is described:
a) The tool carrier 2 has a fixed starting point 16 on the track 3. When the tool carrier 2 is not in operation, the tool carrier 2 is parked at the starting point 16 with the winch cable 82 rolled up and the cleaning apparatus 15 in a resting position
b) The tool carrier 2 is put into operation
c) The cleaning apparatus 15 is lowered to a maximum depth 93
d) The cleaning apparatus 15 is raised to a starting position 92
e) The tool carrier 2 moves in a first direction A along the track 3, for example 80 cm
f) The sequences c)-e) are repeated until the tool carrier 2 has moved along the entire track 3 in a first direction A and is back at the starting point 16
g) The tool carrier 2 is put into the rest mode
h) The tool carrier 2 is put into operation
i) The cleaning apparatus 15 is lowered to a middle depth 94
j) The cleaning apparatus is raised to the starting position 92
k) The tool carrier 2 moves in a second direction B along the track, for example 80 cm
l) The sequences i)-k) are repeated until the tool carrier 2 has moved along the entire track 3 in a second direction B and is back at the starting point 16
m) The tool carrier 2 is put into the rest mode
n) The sequences b)-g) and h)-m) are repeated in the desired order and with the desired frequency

If the system includes a cabled energy supply (figures 8 and 9), the tool carrier 2 may be operated continuously.

If the system includes inductive charging, the sequences will be interrupted and the tool carrier 2 move to the nearest charging point when recharging is needed. When the battery has been recharged, the sequence will continue from where it was stopped. In a system including inductive charging, the tool carrier 2 may, if desirable, run in only one direction along the track 3, as there is no cable that may become twisted.

The control system may include recording of the position of the tool carrier 2 and the cleaning apparatus 15. This information may be saved and used later as documentation of work carried out. In an advantageous embodiment, the tool carrier 2 is operated and monitored wirelessly from shore. The tool carrier 2 may be operated manually via a panel on the top side of the tool carrier, as shown in figure 4, or wirelessly via a terminal.

It should be noted that all the above-mentioned embodiments illustrate the invention, but do not limit it, and persons skilled in the art may construct many alternative embodiments without departing from the scope of the attached claims. In the claims, reference numbers in brackets are not to be regarded as restrictive.

The use of the verb "to comprise" and its different forms does not exclude the presence of elements or steps that are not mentioned in the claims. The indefinite article "a" or "an" before an element does not exclude the presence of several such elements.

## Claims

1. A cage (1) for farming aquatic organisms, the cage (1) comprising a surrounding holding structure (10) comprising a floating element (11) which is connected to a closed enclosure (91), and a railing (13) comprising an upright (12) and a handrail connected to the floating element (11), the cage (1) is provided with a suspended track (3) connected to the surrounding holding structure (10) and along the holding structure (10) on a side facing a centre of the cage (1), the track (3) being arranged to guide a tool carrier (2) movably attached to the track (3), **characterized in that**:
- the circumference of the track (3) around the cage (1) is smaller than the circumference of the railing (13) around the cage (1);
- the track (3) is provided with a plurality of elongated, inclined coupling members (4) projecting at an angle upwards from the track (3) to the holding structure (10) for attaching the track (3) to the holding structure (10);
- the track (3) is endless;
- the track (3) is formed as a closed, elongated structure with a continuous surface;
- each coupling member (4) has been passed circumferentially around the track (3), transversely to the longitudinal direction of the track (3); and
- the track (3) is adapted for carrying the tool carrier (2) on a top side (30) of the track (3).

2. A cage (1) according to claim 1, wherein the track (3) has a circular cross section.

3. A cage (1) according to any one of the preceding claims, wherein the track (3) comprises a plastic pipe.

4. A cage (1) according to any one of the preceding claims, wherein each coupling member (4) is formed, in a first end portion (41), from a flat body.

5. A cage (1) according to any one of the preceding claims, wherein each coupling member (4) constitutes a flexible coupling between the holding structure (10) and the track (3).

6. A cage (1) according to any one of the preceding claims, wherein each coupling member (4) includes an elastic portion.

## Patentansprüche

1. Käfig (1) zum Züchten von Wasserorganismen, wobei der Käfig (1) eine umgebende Haltestruktur (10) umfasst, die ein Schwimmelement (11) umfasst, das mit einer geschlossenen Umfassung (91) verbunden ist, und ein Geländer (13), das einen Pfosten (12) und eine Geländerstange umfasst, die mit dem Schwimmelement (11) verbunden ist, wobei der Käfig (1) mit einer aufgehängten Schiene (3) versehen ist, die mit der umgebenden Haltestruktur (10) verbunden ist und entlang der Haltestruktur (10) auf einer Seite verläuft, die einer Mitte des Käfigs (1) zugewandt ist, wobei die Schiene (3) dazu angeordnet ist, einen Werkzeugträger (2) zu führen, der beweglich an der Schiene (3) angebracht ist, **dadurch gekennzeichnet, dass**:
- der Umfang der Schiene (3) um den Käfig (1) kleiner ist als der Umfang des Geländers (13) um den Käfig (1);
- die Schiene (3) mit einer Vielzahl von länglichen, geneigten Kopplungselementen (4) versehen ist, die in einem Winkel nach oben von der Schiene (3) zur Haltestruktur (10) vorstehen, um die Schiene (3) an der Haltestruktur (10) anzubringen;
- die Schiene (3) endlos ist;
- die Schiene (3) als eine geschlossene, längliche Struktur mit einer kontinuierlichen Oberfläche ausgebildet ist;
- jedes Kopplungselement (4) umlaufend um die Schiene (3), quer zur Längsrichtung der Schiene (3) herumgeführt worden ist; und
- die Schiene (3) zum Tragen des Werkzeugträgers (2) auf einer Oberseite (30) der Schiene (3) angepasst ist.

2. Käfig (1) nach Anspruch 1, wobei die Schiene (3) einen kreisförmigen Querschnitt aufweist.

3. Käfig (1) nach einem der vorstehenden Ansprüche, wobei die Schiene (3) ein Kunststoffrohr umfasst.

4. Käfig (1) nach einem der vorstehenden Ansprüche, wobei jedes Kopplungselement (4) in einem ersten Endabschnitt (41) aus einem flachen Körper geformt ist.

5. Käfig (1) nach einem der vorstehenden Ansprüche, wobei jedes Kopplungselement (4) eine flexible Kopplung zwischen der Haltestruktur (10) und der Schiene (3) bildet.

6. Käfig (1) nach einem der vorstehenden Ansprüche, wobei jedes Kopplungselement (4) einen elastischen Abschnitt einschließt.

## Revendications

1. Cage (1) destinée à la culture d'organismes aquatiques, la cage (1) comprenant une structure de maintien environnante (10) comprenant un élément flottant (11) qui est relié à une enceinte fermée (91), et un garde-corps (13) comprenant un montant (12) et une main courante reliée à l'élément flottant (11), la cage (1) est munie d'une piste suspendue (3) reliée à la structure de maintien environnante (10) et le long de la structure de maintien (10) sur un côté faisant face au centre de la cage (1), la piste (3) étant agencée pour guider un porte-outil (2) fixé de manière mobile à la piste (3), **caractérisée en ce que** :
- la circonférence de la piste (3) autour de la cage (1) est inférieure à la circonférence du garde-corps (13) autour de la cage (1) ;
- la piste (3) est munie d'une pluralité d'éléments d'accouplement inclinés allongés (4) se projetant au niveau d'un angle vers le haut à partir de la piste (3) jusqu'à la structure de maintien (10) pour fixer la piste (3) à la structure de maintien (10) ;
- la piste (3) est sans fin ;
- la piste (3) est formée comme une structure allongée fermée avec une surface continue ;
- chaque élément d'accouplement (4) a été passé de manière circonférentielle autour de la piste (3), de manière transversale à la direction longitudinale de la piste (3) ; et
- la piste (3) est adaptée pour porter le porte-outil (2) sur un côté supérieur (30) de la piste (3).

2. Cage (1) selon la revendication 1, dans laquelle la piste (3) présente une coupe transversale circulaire.

3. Cage (1) selon l'une quelconque des revendications précédentes, dans laquelle la piste (3) comprend un tuyau en plastique.

4. Cage (1) selon l'une quelconque des revendications précédentes, dans laquelle chaque élément d'accouplement (4) est formé, dans une première partie d'extrémité (41), à partir d'un corps plat.

5. Cage (1) selon l'une quelconque des revendications précédentes, dans laquelle chaque élément d'accouplement (4) constitue un accouplement flexible entre la structure de maintien (10) et la piste (3).

6. Cage (1) selon l'une quelconque des revendications précédentes, dans laquelle chaque élément d'accouplement (4) inclut une partie élastique.
